(19) Europäisches Patentamt
European Patent Office
Office européen des brevets

(11) **EP 2 882 618 B1**

(12) **EUROPÄISCHE PATENTSCHRIFT**

(45) Veröffentlichungstag und Bekanntmachung des Hinweises auf die Patenterteilung:
**02.11.2016 Patentblatt 2016/44**

(21) Anmeldenummer: **13744571.4**

(22) Anmeldetag: **02.08.2013**

(51) Int Cl.:
**B60R 25/24** *(2013.01)*   **B60L 11/18** *(2006.01)*
**G01S 13/82** *(2006.01)*   **G01S 13/87** *(2006.01)*
**H01Q 1/32** *(2006.01)*

(86) Internationale Anmeldenummer:
**PCT/EP2013/066251**

(87) Internationale Veröffentlichungsnummer:
**WO 2014/023651 (13.02.2014 Gazette 2014/07)**

(54) **POSITIONIERUNG MIT FUNKBASIERTEM SCHLIESSSYSTEM**

POSITIONING WITH A RADIO-BASED LOCKING SYSTEM

POSITIONNEMENT AU MOYEN D'UN SYSTÈME DE VERROUILLAGE RADIOÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.08.2012 DE 102012214201**

(43) Veröffentlichungstag der Anmeldung:
**17.06.2015 Patentblatt 2015/25**

(73) Patentinhaber: **Bayerische Motoren Werke Aktiengesellschaft**
**80809 München (DE)**

(72) Erfinder:
• **BARBUL, Andreas**
**80993 München (DE)**
• **BERGER, Jens**
**81545 München (DE)**
• **KRAMMER, Josef**
**83607 Holzkirchen (DE)**
• **WAGATHA, Helmut**
**85764 Oberschleissheim (DE)**

(74) Vertreter: **Kammermeier, Peter Frank**
**Bayerische Motoren Werke AG**
**Patentabteilung AJ-5**
**80788 München (DE)**

(56) Entgegenhaltungen:
EP-A1- 2 338 704     EP-A2- 0 984 123
WO-A1-2009/109575    WO-A1-2012/082858
WO-A2-2011/006884    JP-A- 2010 183 804
US-A1- 2008 129 477

EP 2 882 618 B1

**Beschreibung**

Die Erfindung betrifft ein System, umfassend ein Fahrzeug mit einer automatischen, funkbasierten Fahrzeugsicherungseinheit und mit einem Zugangssteuergerät und umfassend ein der Fahrzeugsicherungseinheit zugeordnetes Zugangselement, wobei die Fahrzeugsicherungseinheit mehrere niederfrequente Sendeantennen aufweist und das Zugangselement einen niederfrequenten Empfänger aufweist und durch das Zugangssteuergerät die räumliche Position des Zugangselements relativ zum Fahrzeug durch das Prinzip der elektromagnetischen Abstands- und Winkelmessung zwischen den Sendeantennen und dem Empfänger ermittelbar ist.

Nach dem Stand der Technik wie etwa nach der Schrift EP 0 984 123 A2 werden automatische, funkbasierte Fahrzeugsicherungseinheiten zur Kontrolle beziehungsweise zur Authentifizierung eines Zugangselements genutzt. Das Zugangselement ist üblicherweise ein Funkschlüssel, mit dem sich ein Nutzer eines bestimmten Fahrzeugs ohne aktive Benutzung des diesem Fahrzeug zugeordneten Schlüssels einen Zugang zu diesem Fahrzeug verschaffen kann. Deshalb werden diese Fahrzeugsicherungseinheiten auch als funkbasierte Schließsysteme bezeichnet.

Bei modernen funkbasierten Schließsystemen ist überdies ein Verriegeln des Fahrzeugs bei im Fahrzeuginnenraum befindlichem Funkschlüssel durch räumliche Ortung desselben über das Schließsystem nicht möglich.

Fahrzeuge mit einem elektrifizierten Antriebsstrang verfügen meist über eine Ladeschnittstelle zu einer externen Ladequelle. Die Übertragung von elektrischer Leistung, um beispielsweise einen elektrochemischen Energiespeicher des Fahrzeugs zu laden, erfolgt üblicherweise kabelgebunden oder induktiv.

Bei kabelgebundenen Ladeverfahren muss das Fahrzeug über ein Ladekabel mit der externen Ladequelle wie etwa einer Ladestation verbunden werden, um einen Ladevorgang durchzuführen. Bei induktiven Ladeverfahren erfolgt der Leistungstransfer durch ein elektromagnetisches Erregerfeld einer fahrzeugexternen Primärspule zu einer fahrzeugseitigen Sekundärspule über elektromagnetische Induktion an der Sekundärspule. Die Übertragungseffizienz der elektrischen Leistung ist dabei von der relativen räumlichen Position der Sekundärspule zur Primärspule abhängig. In einem bevorzugten Positionsbereich der Sekundärspule relativ zur Primärspule ist der Anteil der Erregerleistung, der als Leistungsverlust beim Laden auftritt, näherungsweise minimal.

Die Aufgabe, die Sekundärspule in die Ladeposition zu bringen, ist Gegenstand des Stands der Technik. Beispielsweise beschreibt die Schrift WO 2011/006884 A2 für ein Fahrzeug mit einer Primärspule eine elektronische Positionierhilfe, die Reflexionseigenschaften eines am Boden befindlichen Gehäuses der Primärspule nutzt.

Es ist eine Aufgabe der Erfindung, ein verbessertes System zu beschreiben, umfassend ein Fahrzeug mit einer automatischen, funkbasierten Fahrzeugsicherungseinheit und mit einem Zugangssteuergerät und umfassend ein dem Fahrzeug zugeordnetes Zugangselement, wobei das Fahrzeug mehrere niederfrequente Sendeantennen aufweist und das Zugangselement einen niederfrequenten Empfänger aufweist und durch das Zugangssteuergerät die räumliche Position des Zugangselements relativ zum Fahrzeug durch das Prinzip der elektromagnetischen Abstands- und Winkelmessung zwischen den Sendeantennen und dem Empfänger ermittelbar ist.

Gelöst wird diese Aufgabe durch ein System gemäß Anspruch 1. Vorteilhafte Ausführungsformen und Weiterbildungen der Erfindung ergeben sich aus den abhängigen Ansprüchen.

Erfindungsgemäß umfasst das System eine fahrzeugexterne Induktionsladeeinheit mit einer Primärspule, wobei das Fahrzeug eine Sekundärspule zum induktiven Laden des Fahrzeugs an der Induktionsladeeinheit und die Induktionsladeeinheit mindestens eine niederfrequente Empfangsantennen aufweist, und von dem Zugangssteuergerät eine Ermittlung der Ortsposition der Induktionsladeeinheit relativ zum Fahrzeug durch das Prinzip der elektromagnetischen Abstands- und Winkelmessung zwischen mindestens zwei Sendeantennen der mehreren niederfrequenten Sendeantennen und der mindestens einen Empfangsantenne durchführbar ist.

Dies bedeutet, dass zwei niederfrequente Sendeantennen des Fahrzeugs, die vom Zugangssteuergerät betrieben werden, neben der Lokalisierung des Zugangselements auch zur Abstands- und Winkelmessung mit der mindestens einen Empfangsantenne der Induktionsladeeinheit nutzbar sind. Auf diese Weise ist über Komponenten des Schließsystems des Fahrzeugs und das Zugangssteuergerät die fahrzeugexterne Induktionsladeeinheit räumlich ortbar. Es ist damit eine Ortspositionsbestimmung der Induktionsladeeinheit relativ zum Fahrzeug möglich.

Nach einer bevorzugten Ausführungsform der Erfindung nimmt die Sekundärspule zum induktiven Laden eine Ladeposition ein, welche in einem bevorzugten räumlichen Positionsbereich in Bezug auf die Primärspule befindlich ist. Zur Herstellung der Ladeposition ermittelt das System ferner anhand der Ortsposition und der Ladeposition zumindest eine teilweise Fahrtrajektorie, entlang welcher die Ladeposition von der Sekundärspule einnehmbar ist.

In dem bevorzugten Positionsbereich ist der Anteil der Erregerleistung, der als Leistungsverlust beim Laden auftritt, näherungsweise minimal.

Weiterhin ist es sinnvoll, wenn das Zugangssteuergerät die mindestens zwei Sendeantennen treibt, das Zugangssteuergerät eine erste Hochfrequenzkommunikationseinheit umfasst, die Induktionsladeeinheit ein Induktionssteuergerät aufweist, das Induktionssteuergerät eine zweite Hochfrequenzkommunikationseinheit umfasst, das Induktionssteuergerät der mindestens einen Empfangsantenne als Messeinheit der elektromagnetischen Abstands- und Winkelmessung zugeordnet ist und Induktionssignale der mindestens einen Empfangsantenne misst, von dem Induktionssteuergerät die Induktionssignale an das Zugangssteuergerät übermittelbar sind, und das Zugangssteuergerät als Recheneinheit mittels der Induktionssignale die Ortsposition durch Triangulation ermittelt.

Das Zugangssteuergerät betreibt also mindestens zwei Sendeantennen des funkbasierten Schließsystems, um eine Winkel- und Abstandsmessung zwischen den Sendeantennen und mit der mindestens einen Empfangsantenne durchzuführen. Nach bevorzugten Ausgestaltungen weist die Ladeeinheit genau eine Empfangsantenne oder genau zwei Empfangsantennen auf. Das gemessene Induktionssignal ist vom Induktionssteuergerät an das Zugangssteuergerät versendbar. Dem Zugangssteuergerät dient es als Eingangsgröße, um die Ortsposition durch Triangulation zu berechnen.

Gemäß einer weiteren Ausführungsform der Erfindung ermittelt das Zugangssteuergerät oder ein weiteres Steuergerät des Fahrzeugs anhand der Ortsposition die Fahrtrajektorie, wobei das Fahrzeug ein der Fahrtrajektorie entsprechendes Fahrmanöver selbsttätig durchführt oder das Fahrzeug einem Fahrer des Fahrzeugs über eine geeignete Mensch-Maschine-Schnittstelle ein der Fahrtrajektorie entsprechendes Fahrmanöver mitteilt.

Die Mitteilung an den Fahrer kann zum Beispiel durch eine Einblendung einer Lenkempfehlung in ein Head-Up-Display des Fahrzeugs oder durch eine Sprachanweisung, die mit einer Sprachanweisung eines Navigationssystems des Fahrzeugs vergleichbar ist, erfolgen.

Zur Durchführung eines Fahrmanövers wird der Fahrer also über die Mensch-Maschine-Schnittstelle durch ausgegebene Anweisungen unterstützt (z.B. "links lenken") oder die Trajektorie dient als Eingangsgröße für ein Fahrerassistenzsystem, das das Fahrzeug automatisch in die Ladeposition bewegt.

Nach einer weiteren Ausführungsform der Erfindung versendet die erste Hochfrequenzkommunikationseinheit zunächst ein codiertes Suchsignal. Nach Empfang des Suchsignals durch das Induktionssteuergerät versendet die zweite Hochfrequenzkommunikationseinheit ein codiertes Bestätigungssignal an das Zugangssteuergerät. Der Empfang des Bestätigungssignals triggert eine Initialisierungsroutine zwischen der mindestens einem Sendeantenne und der mindestens einen Empfangsantenne, die vom Zugangssteuergerät und vom Induktionssteuergerät durchgeführt wird. Nach der Initialisierungsroutine emittieren die mindestens zwei Sendeantennen ein codiertes elektromagnetisches Positionierungssignal, wobei in Bezug auf das Fahrzeugkoordinatensystem der magnetische Anteil des Positionierungssignals eine vorgegebene Feldorientierung und eine vorgegebene Feldstärke aufweist. Die mindestens eine Empfangsantenne empfängt die mindestens zwei Positionierungssignale der mindestens zwei Sendeantennen und das Induktionssteuergerät misst für jedes Positionierungssignal einen Magnetfeldvektor, der durch die Codierung des Positionssignals eindeutig einer der mindestens zwei Sendeantennen zugeordnet ist. Der Magnetfeldvektor wird als gemessenes Induktionssignal vom Induktionssteuergerät an das Zugangssteuergerät übermittelt. Nach der Methode der Triangulation berechnet das Zugangssteuergerät die örtliche Lage der Sendeantennen in Bezug auf die Empfangsantennen, welche eindeutig die Ortsposition beschreibt. Weiterhin ermittelt das Zugangssteuergerät oder ein weiteres Steuergerät des Fahrzeugs zumindest eine teilweise Fahrtrajektorie, entlang welcher die Ortsposition der Ladeposition annäherbar ist.

Kommt es nach Ermittlung der Fahrtrajektorie zu einem Fahrmanöver wird die Bestimmung der Ortsposition in Echtzeit wiederholt, um die Fahrtrajektorie zu aktualisieren. Bei Erreichen der Ladeposition beschreibt die aktualisierte Fahrtrajektorie ein Anhaltemanöver. Bei einem Anhaltemanöver kommt das Fahrzeug zum Stillstand.

Die Erfindung beruht auf den nachfolgend dargelegten Überlegungen:

In einer Vielzahl von Anwendungen besteht die Aufgabe, den Abstand eines Objekts (z.B. ein Fahrzeug) in Bezug zu einem anderen Objekt (z.B. zu einem Fahrzeugschlüssel) zu bestimmen. Hier bietet die Funktechnik im Hochfrequenz- und Niederfrequenzband mit der Vermessung von Feldstärken und Laufzeiten von elektromagnetischen Wechselfeldern Möglichkeiten, dies drahtlos zu tun. Ein Beispiel sind moderne funkbasierte Schließsysteme von Fahrzeugen wie schlüsselloser Zugang, bei weichen das Fahrzeug als Sender und der Fahrzeugschlüssel als Empfänger fungiert.

Moderne Schließsysteme von Fahrzeugen stellen dem Nutzer einen komfortablen Zugang zum Fahrzeug bereit. Dabei handelt es sich um automatische Systeme, mit welchen ein Fahrzeug ohne aktive Benutzung eines Autoschlüssels entriegelbar ist. Die Anwesenheit des Autoschlüssels innerhalb eines vorgegebenen relativen örtlichen Bereichs um das Fahrzeug ist zum Entriegeln ausreichend. Sobald sich der Schlüssel dem Fahrzeug bis auf einen örtlich sensiblen Bereich nähert, wird über mehrere im Fahrzeug verteilte Antennen ein codiertes Anfragesignal mit einer Frequenz im niederfrequenten Bereich ausgesendet. Das Schließsystem geht darauf in einen Empfangsmodus im ultrahochfrequenten Bereich, um gegebenenfalls ein Bestätigungssignal des Fahrzeugschlüssels zu empfangen. Ist der Fahrzeugschlüssel, ausgestattet mit einem RFID-Transponder, mit einer 3D-Spule oder mit einer Kombination von drei Spulen, in Reichweite, wird das Anfragesignal vom Schlüssel empfangen und decodiert. Der Schlüssel versendet das Bestätigungssignal mit einer neuen Codierung im ultrahochfrequenten Bereich. Bei "passendem" Bestätigungssignal wird das Fahrzeug entriegelt.

In einem umgekehrten Anwendungsfall ist das Fahrzeug nicht verriegelbar, sofern der Fahrzeugschlüssel innerhalb eines vorgegebenen örtlichen Bereichs befindlich ist, der beispielsweise die Fahrgastzelle oder der Kofferraum sein kann, um ein versehentliches Einschließen des Fahrzeugschlüssels zu verhindern.

Es wird vorgeschlagen, das Schließsystem des Fahrzeugs zur Bestimmung der Ortsposition einer fahrzeugexternen Induktivladeeinheit für ein Fahrzeug mit elektrifiziertem Antriebsstrang zu nutzen. Hierfür werden mindestens zwei eindeutig identifizierbare elektromagnetische Sendersignale von Antennen des Schließsystems genutzt, um an einen Empfänger der fahrzeugexternen Ladeeinheit Signale von mindestens zwei unterschiedlichen Senderpositionen zur Winkel- und Abstandsmessung zu empfangen. Dann kann durch Triangulation eindeutig auf die Position des Empfängers in Bezug auf die Sender geschlossen werden. Über das gleiche Funksystem können ferner auf der gleichen Frequenz oder auf einer anderen Frequenz, bevorzugt im Hochfrequenzband, Kommunikationssignale (zum Beispiel zur Positionsbeschreibung) zwischen den mindestens 2 Sendern und dem Empfänger ausgetauscht werden.

Die Sender sind im oder am Fahrzeug integriert und der Empfänger ist an der Primärspule untergebracht. Durch Triangulation wird eindeutig auf die Position der Sender in Bezug auf den Empfänger geschlossen. Über das gleiche Funksystem können ferner auf der gleichen Frequenz oder einer anderen Frequenz auch Kommunikationssignale (z.B. Positionsdaten) zwischen den beiden Sendern und dem Empfänger ausgetauscht werden.

Dies ermöglicht eine eindeutige Positionsbestimmung bezüglich Sender und Empfänger mit einer hohen Genauigkeit durch mehrere Eingangssignale und Triangulation.

Das funkbasierte Schließsystem besitzt je nach Fahrzeugtyp eine bestimmte Anzahl von Sendespulen mit denen ein elektromagnetisches Niederfrequenzfeld generiert wird, welches von einer bevorzugt dreidimensionalen Spule oder einer Kombination von drei einzelnen Spulen, welche drei orthogonale Raumrichtungen abdeckt, im Fahrzeugzugangsschlüssel vermessen wird. Daraus kann der Abstand des Schlüssels zur Sendespule bestimmt werden. Über mehrere Sendespulen im Fahrzeug kann die aktuelle räumliche Position des Funkschlüssels in Bezug zum Fahrzeug bestimmt werden. Davon ist ableitbar, ob der Schlüssel sich außerhalb oder innerhalb des Fahrzeugs befindet. Diese Information ist für mehrere Anwendungen im Fahrzeug nützlich, beispielsweise zum Verriegeln und Öffnen des Fahrzeugs oder zur Einschaltverhinderung bei einer automatischen Motor-Start-Stopp-Funktion. Auch für Induktivladesysteme von ladbaren Fahrzeugen kann diese Information geschickt genutzt werden.

Zum induktiven Laden ist eine optimale Positionierung der fahrzeugseitigen Spule, der Sekundärspule, im räumlichen Bezug zur infrastrukturseitigen Spule, der Primärspule, für maximale Leistungsübertragungseffizienz beim kabellosen Laden notwendig. Das funkbasierte Schließsystem dient als Positioniersystem für das Fahrzeug durch die Methode der Triangulation. Dazu werden bevorzugt mindestens zwei Sendespulen des funkbasierten Schließsystems fahrzeugseitig verwendet. Eine Induktivladestation außerhalb des Fahrzeugs weist mindestens einen Empfänger auf, der bevorzugt dreidimensional gestaltet ist und alternativ auch eindimensional gestaltet sein kann. Bevorzugt entsprechen der Empfänger der Induktivladestation oder die Empfänger der Induktivladestation dem Empfänger im Funkschlüssel.

Besonders vorteilhaft daran ist, dass Komponenten schon bestehender funkbasierter Schließsysteme für die Positionierung verwendet (Senderspulen und deren Ansteuerung zur Positionsbestimmung) werden können. Die bereits installierten Sendespulen des Schließsystems werden genutzt und über das existierende Zugangssteuergerät über Datenbus angesprochen. Die Sendeantennen senden ein Niederfrequenz-Signal mit den gewünschten Parametern.

Die Nutzung der Sendespulen des funkbasierten Schließsystems bedeutet eine funktionale, bauraumneutrale und gewichtsneutrale Erweiterung des Fahrzeugs, ohne für die Umsetzung dieser Funktion weitere Hardware in das Fahrzeug zu integrieren.

Im Folgenden wird anhand der beigefügten Zeichnungen ein bevorzugtes Ausführungsbeispiel der Erfindung beschrieben. Daraus ergeben sich weitere Details, bevorzugte Ausführungsformen und Weiterbildungen der Erfindung. Im Einzelnen zeigen schematisch

Fig. 1    Positionierung mit Schließsystem durch Triangulation mit 2 Sendern an einem Fahrzeug und 2 Empfängern an einer Ladeeinheit.

Fig. 2    Hergestellte Ladeposition

In den Figuren beschreiben gleiche Bezugszeichen gleiche technische Merkmale. Ein Fahrzeug mit einem elektrifizierten Antriebsstrang kann an einer Induktivladestation kabellos geladen werden. In den Ausführungsbeispielen ist ein Fahrzeug (1) mit einem elektrifizierten Antriebsstrang schematisch dargestellt. Dabei kann es ich um ein Hybrid- oder Elektrofahrzeug handeln, möglicherweise auch um ein Plug-In-Hybridfahrzeug, sofern dieses neben einer Schnittstelle zum kabelgebundenen Laden auch über eine Ladeschnittstelle für induktives Laden verfügt. Das Fahrzeug umfasst eine fahrzeugseitige Ladearchitektur für kabelloses, induktives Laden, wobei die Ladearchitektur als zentrale fahrzeugseitige Komponente eine Sekundärspule (2) aufweist.

Das Fahrzeug verfügt zudem über ein funkbasiertes Schließsystem mit einem Zugangssteuergerät (21). Das funkbasierte Schließsystem umfasst zumindest zwei niederfrequente Antennen (5, 6), die von dem Zugangssteuergerät betreibbar sind. Ferner gehört zum funkbasierten Schließsystem ein Funkschlüssel (30), der innerhalb oder außerhalb des Fahrzeugs befindlich sein kann. Der Funkschlüssel weist einen niederfrequenten Empfänger auf, der in alle drei Raumrichtungen sensitiv ist. Dieser wird deshalb als 3D-Empfänger bezeichnet. Das funkbasierte Schließsystem erlaubt einen "schlüssellosen" Zugang zum Fahrzeug und verhindert ein Aussperren von Fahrzeugnutzern, durch Verhinderung der Verriegelung des Fahrzeugs, wenn der Schlüssel im Fahrzeug befindlich ist. Der Zugang zum Fahrzeug sowie die Verriegelungssperre erfolgen durch Lokalisierung des Schlüssels in Bezug auf das die räumlichen Ausmaße des Fahrzeugs. Die Positionsbestimmung erfolgt durch eine Abstandsbestimmung über die zumindest zwei niederfrequenten Antennen des Fahrzeugs und den 3D-Empfänger des Schlüssels.

Außerhalb des Fahrzeugs befindet sich eine Ladeeinheit (3) für induktives Laden eines Fahrzeugs mit elektrifiziertem Antriebsstrang. Hauptkomponente der Ladeeinheit ist eine Primärspule (4). Die Ladeeinheit kann zum Laden einer Vielzahl von Fahrzeugen geeignet sein, wobei zu einem bestimmten Zeitpunkt nur ein einziges Fahrzeug an der Primärspule ladbar ist. Die Primärspule ist mechanisch fest in der Ladeeinheit integriert. Die Ladestation ist stationär im oder am Untergrund befindlich. Außerdem weist die Ladeeinheit ein Induktionssteuergerät (22') auf.

Als Ladevorgang wird jener Zeitraum zwischen einem Initialisierungsvorgang der Ladeverbindung und einem Beendigungsvorgang der Ladeverbindung bezeichnet. Der Ladevorgang umfasst insbesondere jene Zeitpunkte, zu denen elektrische Leistung von der Primärspule auf die Sekundärspule übertragen wird oder zumindest übertragbar ist.

Für einen Ladevorgang ist vorausgesetzt, dass die Sekundärspule in der Ladeposition, d.h. innerhalb eines bestimmten räumlichen Bereichs relativ zur Primärspule befindlich ist. Dieser räumliche Bereich ist derart charakterisiert, dass ein vorgegebener geometrischer Bezugspunkt der Sekundärspule, welcher von der Konfiguration der Sekundärspule abhängig ist, von einem vorgegebenen geometrischen Bezugspunkt der Primärspule, welcher von der Konfiguration der Primärspule abhängig ist, bezüglich der drei Raumrichtungen, die das dem Fachmann bekannten fahrzeugbezogene Koordinatensystem bildet, nur bis zu einem vorgegebenen Toleranzmaß für jede der drei Raumrichtungen abweicht. In der Ladeposition erreicht Ober die Übertragungseffizienz an elektrischer Leistung zwischen der Primärspule und der Sekundärspule ein Optimum.

Befindet sich der Bezugspunkt der Sekundärspule räumlich relativ zum Bezugspunkt der Primärspule so, dass der auf jede der drei Raumrichtungen bezogene Abstand zwischen diesen beiden Bezugspunkten das für die jeweilige Achse vorgegebene Toleranzmaß nicht übersteigt, befindet sich die Sekundärspule in der Ladeposition. Aufgrund der Tatsache, dass die Sekundärspule mechanisch fest an dem Fahrzeug befindlich ist bzw. in das Fahrzeug integriert ist, befindet sich, sofern die Sekundärspule in der Ladeposition befindlich ist, auch das Fahrzeug in einer Fahrzeugladeposition. Da im Rahmen dieses Dokuments die Fahrzeugladeposition in Bezug auf deren technischen Effekt gleichbedeutend mit der Ladeposition ist, wird der Begriff der Fahrzeugladeposition vereinfachend ebenfalls unter dem Begriff Ladeposition verstanden.

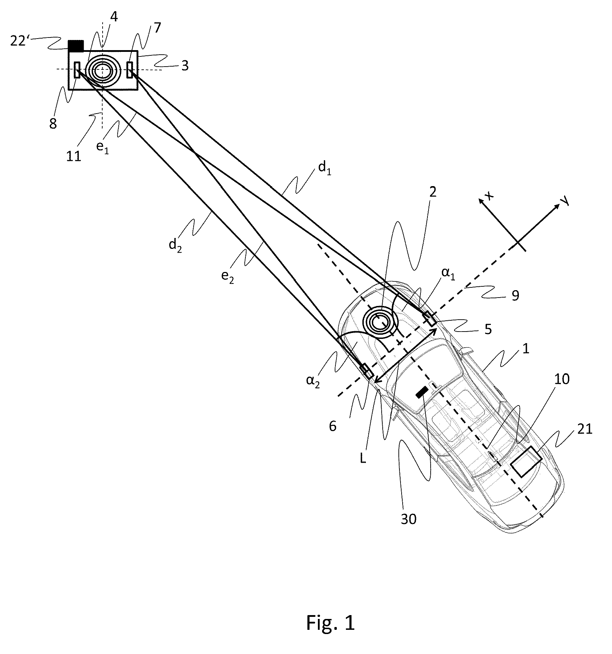

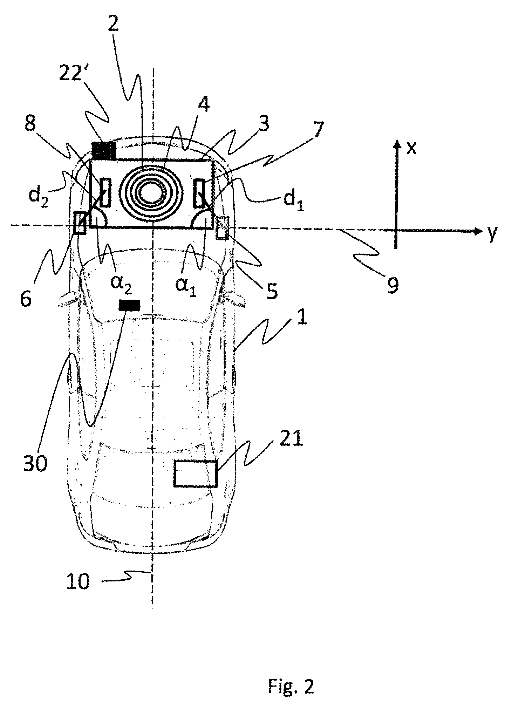

Um einen Ladevorgang zu initialisieren, ist es also notwendig, das Fahrzeug in die vorgegebene Ladeposition zu bringen. In den beschriebenen Ausführungsformen erfolgt dies durch eine Bewegung des Fahrzeugs. Dabei ist es essentiell, die Position des Fahrzeugs und damit die Position der Sekundärspule relativ zur Ladeeinheit und damit zur Primärspule zu bestimmen. In den Ausführungsbeispielen erfolgt dies durch Abstands- und Winkelmessung mit der Methode der Triangulation. Die Messung beruht dabei auf der Erfassung des Magnetfeldvektors eines definierten, mit einer Antenne erzeugten elektromagnetischen Feldes. Sofern die Antenne als eindimensionale Antenne ausgestaltet ist, wird der empfangene Magnetfeldvektor am Ort des Empfängers als eindimensionaler Vektor, d.h. als Skalar, erfasst. Ein erstes Ausführungsbeispiel wird anhand der Fig. 1 und 2 beschrieben. Dabei werden zwei Sendeantennen im Fahrzeug und zwei Empfangsantennen in der Ladeeinheit eingesetzt. Die beiden Sendeantennen werden durch das Zugangssteuergerät und die beiden Empfangsantennen durch das Induktionssteuergerät betrieben.

Bevorzugt sind gemäß dem ersten Ausführungsbeispiel die Sendeantennen, auch Sender genannt, Niederfrequenzantennen und die Empfangsantennen, auch Empfänger genannt, Niederfrequenzempfänger. Die Sender und die Empfänger arbeiten in einem Frequenzbereich von unter 150 kHz, wobei ein bevorzugtes Frequenzband ohne Beschränkung der Allgemeinheit etwa bei 125 kHz liegt.

Die erste Ausführungsform beschreibt anhand der Fig. 1 die Ortsbestimmung des Fahrzeugs, wobei die beiden Sendeantennen und das Zugangssteuergerät im Fahrzeug als Teil des funkbasierten Schließsystems und die beiden Empfänger sowie das Induktionssteuergerät in der Ladeeinheit integriert sind. Die Antenne (5) ist die erste Sendeantenne, die Antenne (6) ist die zweite Sendeantenne. Der Empfänger (7) ist der erste Empfänger, der Empfänger (8) ist der zweite Empfänger.

Nach dieser Ausführungsform umfasst das Zugangssteuergerät eine erste Kommunikationseinheit und das Induktionssteuergerät umfasst eine zweite Kommunikationseinheit. Beide Kommunikationseinheiten können im Hochfrequenzbereich in einem bevorzugten Frequenzband des verbreiteten Schmalbandfunks bei 433 MHz oder 868 MHz Informationssignale austauschen. Es können alternativ auch hochfrequentere Bänder im GHz-Bereich genutzt werden, z.B. nach WLAN- oder Bluetooth-Standards. Diese Informationssignale sind insbesondere codiert, so dass ein von einer Kommunikationseinheit gesendetes Signal derselben eindeutig zuordenbar ist. Beide Kommunikationseinheiten können Informationssignale versenden und empfangen.

Um nach der ersten Ausführungsform oder nach der zweiten Ausführungsform die Ladeposition herzustellen, ist zunächst eine Basiskommunikation zwischen den beiden Kommunikationseinheiten und damit zwischen dem Fahrzeug und der Ladeeinheit herzustellen. Hierzu versendet zumindest eine Kommunikationseinheit in regelmäßigen Zeitabständen von weniger als 10 Sekunden ein codiertes, hochfrequentes Suchsignal mit einer Suchreichweite von bis zu 100 Metern in Bezug auf die Sensitivitätsschwelle der empfangenden Kommunikationseinheit. Der Zeitabstand des Versands des Suchsignals ist alternativ mit der Geschwindigkeit des Fahrzeugs umgekehrt proportional verknüpft. Sobald die empfangende Kommunikationseinheit das Suchsignal empfängt, versendet die das Suchsignal empfangende Kommunikationseinheit ein codiertes Bestätigungssignal mit einer Reichweite, die der Suchreichweite entspricht, an die das Suchsignal versendende Kommunikationseinheit. Sofern das Bestätigungssignal von der das Suchsignal versendenden Kommunikationseinheit empfangen wird, ist die Basiskommunikation zwischen den Kommunikationseinheiten hergestellt und es befindet sich das Fahrzeug in Bezug auf die Ladeeinheit zumindest innerhalb eines Abstands, der nicht größer ist als die Suchreichweite. Die Kommunikationseinheit der Ladestation versendet keine Signale, sofern die Ladestation für einen Ladevorgang nicht zur Verfügung steht, z. B. durch Nutzung durch ein anderes Fahrzeug. Damit befindet sich das Fahrzeug zunächst in einer sogenannten Grobposition bezüglich einer zum Laden tatsächlich nutzbaren Ladeeinheit.

In der Grobposition besteht die Basiskommunikationsverbindung zwischen dem Fahrzeug und der Ladeeinheit durch die beiden Kommunikationseinheiten. Durch die Codierung von Suchsignal und Bestätigungssignal ist gewährleistbar, dass die Kommunikation zwischen dem Fahrzeug und der Ladeeinheit eindeutig ist. Dies bedeutet, dass, falls zum Beispiel mehrere gleichartige Ladeeinheiten für mehrere Fahrzeuge mit gleichartiger Ladearchitektur vorhanden sind, eine Kommunikation zwischen einem bestimmten Fahrzeug dieser mehreren Fahrzeuge und einer bestimmten Ladeeinheit dieser mehreren Ladeeinheiten besteht und dieses bestimmte Fahrzeug in Bezug auf die bestimmte Ladeeinheit in der Grobposition befindlich ist.

Bei hergestellter Basiskommunikation in der Grobposition sind weitere Informationen zwischen den beiden Kommunikationseinheiten austauschbar. Insbesondere ist die Positionierung des Fahrzeugs durch Triangulation initialisierbar. Zur Initialsierung kann das Zugangssteuergerät über eine geeignete Mensch-Maschine-Schnittstelle (MMS) eine Anfrage an den Fahrer des Fahrzeugs richten, ob die Herstellung der Ladeposition in Bezug auf die Ladeeinheit, mit welcher die Basiskommunikation besteht, erfolgen soll. Falls dies der Fahrer des Fahrzeugs in geeigneter Weise, die nicht Gegenstand dieses Dokuments ist, bestätigt, wird die Positionierung des Fahrzeugs durch Triangulation initialisiert.

Nach dem ersten Ausführungsbeispiel bedeutet die Initialisierung die Ansteuerung der Sender durch das Induktionssteuergerät und Ansteuerung der Empfänger durch das Zugangssteuergerät sowie einen Verbindungsaufbau der Sender mit den Empfängern in dem Niederfrequenzbereich. Dabei ist das von den Sendern emittierte Signal codiert, um eine eindeutige Zuordnung zwischen Sendern und Empfängern, d.h. zwischen Fahrzeug und Ladeeinheit, zu gewährleisten. Dies kann beispielsweise mit einer 8-bit-Codierung ermöglicht werden.

Es kann auch sein, dass die Initialisierung auf einer vereinfachten gegenseitigen Erkennung von Fahrzeug und Ladeeinheit beruht, wenn ein bestimmtes Fahrzeug und eine bestimmte Ladeeinheit fest miteinander gekoppelt sind, was dem Fachmann als Pairing bekannt ist.

Nach der Initialisierung erfolgt die eigentliche Ortsbestimmung durch Triangulation. Dazu versenden die Sender jeweils ein elektromagnetisches Signal definierter Feldstärke, das Positionierungssignal genannt wird. Die Reichweite des Positionierungssignals übersteigt die Suchreichweite Das Positionierungssignal des ersten Senders (5) wird als erstes Positionierungssignal bezeichnet. Das Positionierungssignal des zweiten Senders (6) wird als zweites Positionierungssignal bezeichnet.

Durch die Verbaulage der Sender im Fahrzeug schwingt der Magnetfeldvektor der Positionierungssignale jeweils entlang einer bestimmten räumlichen Vorzugsachse und das Magnetfeld weist eine bevorzugte Ausbreitungsrichtung auf. Nach diesem Ausführungsbeispiel liegt ohne Beschränkung der Allgemeinheit die Vorzugsachse in erster Näherung entlang der x-Achse des dem Fachmann bekannten fahrzeugbezogenen Koordinatensystems des in der Grobposition befindlichen Fahrzeugs und die Ausbreitungsrichtung in der z-Achse des in der Grobposition befindlichen Fahrzeugs.

Die Empfänger in der Ladeeinheit weisen eine derartige Verbaulage auf, dass die Empfänger in der x-y-Ebene des fahrzeugbezogenen Koordinatensystems des in der Grobposition befindlichen Fahrzeugs, die höchste Empfangssensitivität auf ein Magnetfeld und somit die höchste Messgenauigkeit aufweisen.

Alternativ können auch dreidimensionale Empfänger mit einer dreidimensionalen Empfangscharakterstik, die dem 3D-Empfänger des Funkschlüssels entsprechen und die entlang aller drei Raumachsen durch eine vergleichbare Messgenauigkeit charakterisiert sind, sowie dreidimensionale Sender eingesetzt werden. Dies bedeutet, dass die Sender eine dreidimensionale Abstrahlcharakteristik aufweisen. Die nachfolgende eindimensionale Betrachtung ist in analoger Weise auf die weiteren räumlichen Dimensionen bei einer dreidimensionalen Abstrahlcharakteristik und eine dreidimensionale Empfangscharakteristik anwendbar.

Im Folgenden wird ohne Beschränkung der Allgemeinheit von eindimensionalen Sendern und eindimensionalen Empfängern ausgegangen. Die Feldstärke des ersten Positionierungssignals und damit ein erster Magnetfeldvektor $H_1$, ist eindeutig festgelegt durch einen ersten Senderstrom $I_1$, durch eine erste Wicklungszahl $N_1$ sowie durch den Radius $r_1$ des ersten Senders. Die Feldstärke des zweiten Positionierungssignals und damit ein zweiter Magnetfeldvektor $H_2$ ist eindeutig festgelegt durch einen zweiten Senderstrom $I_2$, durch eine erste Wicklungszahl $N_2$ sowie durch den Radius $r_2$ des zweiten Senders.

Die beiden Empfänger sind mit einem Abstand L im Fahrzeug verbaut, der senkrecht auf der Fahrzeuglängsachse (10) und entlang einer Parallelen (9) der Fahrzeugquerachse orientiert ist.

Der erste Empfänger detektiert den ersten Magnetfeldvektor $H_1$ an der Stelle des ersten Empfängers. Das Induktionssteuergerät wertet den Empfänger aus und ermittelt ein Messsignal $H_{1,x1}$, das die Feldstärke des ersten Magnetfeldes an der Stelle des ersten Empfängers in Bezug auf die x-Richtung im Fahrzeugkoordinatensystem wiedergibt.

Der zweite Empfänger detektiert den ersten Magnetfeldvektor $H_1$ an der Stelle des zweiten Empfängers. Das Induktionssteuergerät wertet den zweiten Empfänger aus und ermittelt ein Messsignal $H_{1,x2}$, das die Feldstärke des ersten Magnetfeldes an der Stelle des zweiten Empfängers in Bezug auf die x-Richtung im Fahrzeugkoordinatensystem wiedergibt.

Der erste Empfänger detektiert den zweiten Magnetfeldvektor $H_2$ an der Stelle des ersten Empfängers. Das Induktionssteuergerät wertet den Empfänger aus und ermittelt ein Messsignal $H_{2,x1}$, das die Feldstärke des zweiten Magnetfeldes an der Stelle des ersten Empfängers in Bezug auf die x-Richtung im Fahrzeugkoordinatensystem wiedergibt.

Der zweite Empfänger detektiert den zweiten Magnetfeldvektor $H_2$ an der Stelle des zweiten Empfängers. Das Induktionssteuergerät wertet den zweiten Empfänger aus und ermittelt ein Messsignal $H_{2,x2}$, das die Feldstärke des zweiten Magnetfeldes an der Stelle des zweiten Empfängers in Bezug auf die x-Richtung im Fahrzeugkoordinatensystem wiedergibt.

Die zeitabhängigen Messsignale werden zu einem bestimmten Zeitpunkt $t_1$ erfasst als $H_{1,x1}(t_1)$, $H_{1,x2}(t_1)$, $H_{2,x1}(t_1)$ und $H_{2,x2}(t_1)$ und vom Induktionssteuergerät verarbeitet oder an das Zugangssteuergerät übermittelt und vom Zugangssteuergerät verarbeitet. Bei dieser Signalverarbeitung wird durch Triangulation die Position des Fahrzeugs zu dem Zeitpunkt $t_1$ ermittelt.

Die Strecke $d_1$, die den Abstand zwischen dem ersten Sender und dem ersten Empfänger beschreibt, ergibt sich als:

$$d_1(t_1) = \sqrt{-r_1^2 + \left(\frac{2H_{1,x1}(t_1)}{N_1 I_1 r_1^2}\right)^{\frac{2}{3}}}$$

Die Strecke $e_2$, die den Abstand zwischen dem ersten Sender und dem zweiten Empfänger beschreibt, ergibt sich als:

$$e_2(t_1) = \sqrt{-r_1^2 + \left(\frac{2H_{1,x2}(t_1)}{N_1 I_1 r_1^2}\right)^{\frac{2}{3}}}$$

Der Winkel $\alpha_1$ zwischen der Strecke $d_1$ und der Strecke L ergibt sich zu:

$$\alpha_1(t_1) = \arccos\left(\frac{e_2(t_1)^2 - d_1(t_1)^2 - L^2}{-2d_1(t_1)L}\right)$$

Durch die Bestimmung von $d_1$, $e_2$ und $\alpha_1$ zum Zeitpunkt $t_1$ ist die Ortsposition des Fahrzeugs relativ zur Ladeeinheit eindeutig bestimmt.

Durch Triangulation sind weitere Größen ermittelbar. Die Strecke $d_2$, die den Abstand zwischen dem zweiten Sender und dem ersten Empfänger beschreibt, ergibt sich als:

$$d_2(t_1) = \sqrt{-r_2^2 + \left(\frac{2H_{2,x1}(t_1)}{N_2 I_2 r_2^2}\right)^{\frac{2}{3}}}$$

Die Strecke $e_1$, die den Abstand zwischen dem zweiten Sender und dem ersten Empfänger beschreibt, ergibt sich als:

$$e_1(t_1) = \sqrt{-r_2^2 + \left(\frac{2H_{2,x1}(t_1)}{N_2 I_2 r_2^2}\right)^{\frac{2}{3}}}$$

Der Winkel $\alpha_2$ zwischen der Strecke $d_2$ und der Strecke L ergibt sich zu:

$$\alpha_2(t_1) = \arccos\left(\frac{e_1(t_1)^2 - d_2(t_1)^2 - L^2}{-2d_2(t_1)L}\right)$$

Die Signalverarbeitung umfasst weiterhin die Berechnung einer Fahrtrajektorie des Fahrzeugs, entlang derselben ausgehend von der Ortsposition des Fahrzeugs zum Zeitpunkt $t_1$ das Fahrzeug in die Ladeposition bewegbar ist. Die Berechnung der Fahrtrajektorie wird hier nicht detailliert beschrieben.

Ausgehend vom Zeitpunkt $t_1$ wird mit einer Wiederholrate von mindestens 10 Hz die Position des Fahrzeugs zu späteren Zeitpunkten $t_n$ ermittelt und die Fahrtrajektorie ausgehend von der Ortsposition des Fahrzeugs zum Zeitpunkt $t_n$ aktualisiert.

Fig. 2 zeigt die Ladeposition für die erste Ausführungsform. Die Ladeposition ist durch die beschriebene Anordnung der Sender im Fahrzeug bzw. der Empfänger in der Ladeeinheit dann hergestellt, wenn die Strecke $d_1$ zwischen dem ersten Sender und dem ersten Empfänger den gleichen Abstand beschreibt wie die Strecke $d_2$ zwischen dem zweiten Sender und dem zweiten Empfänger. Dieser gleiche Abstand entspricht einem vorgegebenen Sollabstand d, der die Einstellung der Ladeposition beschreibt und der im Zugangssteuergerät und/oder Induktionssteuergerät hinterlegt ist. Ferner entsprechen die beiden Winkel $\alpha_1$ und $\alpha_2$ einem vorgegebenen Sollwinkel $\alpha$, der ebenfalls die Einstellung der Ladeposition beschreibt. Durch die achsensymmetrische Anordnung der Sender und der Empfänger bei hergestellter Ladeposition bezüglich der Fahrzeuglängsachse ist die Ladeposition beschrieben durch $d = d_1 = d_2$ und $\alpha = \alpha_1 = \alpha_2$. Bei einer andersartigen geometrischen Anordnung der Sender und Empfänger ergeben sich in entsprechender Weise andere Sollwinkel für $\alpha_1$ und $\alpha_2$ sowie andere Sollabstände für $d_1$ und $d_2$. Bei Erreichen der Ladeposition beschreibt die Fahrtrajektorie ein Brems- oder Anhaltemanöver, um das Fahrzeug in der Ladeposition zum Stillstand zu bringen.

Nach einer Variante einer der Ausführungsformen werden der Sollabstand d und der Sollwinkel $\alpha$ durch einen Lernalgorithmus mit zunehmender Zahl von erfolgten Ladevorgängen in Richtung steigender Übertragungseffizienz optimiert.

Gemäß einer dritten Ausführungsform, die eine Abwandlung der zweiten Ausführungsform darstellt, fungiert die Primärspule selbst als Empfängerspule, so dass die Ladeeinheit neben der Primärspule keine zusätzliche Spule umfasst.

Es können auch bei mehreren benachbarten Ladeeinheiten deren Empfänger vernetzt betrieben werden. Dies bedeutet, dass zur Erhöhung der Reichweite der Empfänger einer Ladeeinheit zur Ortsbestimmung des Fahrzeugs bezüglich einer dritten Ladeeinheit genutzt wird. Dies erfordert, dass die Positionen der mehreren Ladeeinheiten zueinander dem Zugangssteuergerät bekannt sind oder an dieses übermittelbar sind.

Die Positionsbestimmung durch Triangulation kann auch während eines Ladevorgangs zur Überprüfung der Einhaltung der Ladeposition eingesetzt werden.

**Patentansprüche**

1.  System, umfassend ein Fahrzeug (1) mit einer automatischen, funkbasierten Fahrzeugsicherungseinheit und mit einem Zugangssteuergerät (21) und umfassend ein der Fahrzeugsicherungseinheit zugeordnetes Zugangselement (30), wobei die Fahrzeugsicherungseinheit mehrere niederfrequente Sendeantennen (5,6) aufweist und das Zugangselement einen niederfrequenten Empfänger aufweist, durch das Zugangssteuergerät die räumliche Position des Zugangselements relativ zum Fahrzeug durch das Prinzip der elektromagnetischen Abstands- und Winkelmessung zwischen den Sendeantennen und dem Empfänger ermittelbar ist,

    - das System eine fahrzeugexterne Induktionsladeeinheit (3) mit einer Primärspule (4) umfasst,
    - das Fahrzeug eine Sekundärspule (2) zum induktiven Laden des Fahrzeugs an der Induktionsladeeinheit umfasst, und
    - die Induktionsladeeinheit mindestens eine niederfrequente Empfangsantenne (7,8) aufweist, **dadurch gekennzeichnet, dass**
    - von dem Zugangssteuergerät eine Ermittlung der Ortsposition der Induktionsladeeinheit relativ zum Fahrzeug durch das Prinzip der elektromagnetischen Abstands- und Winkelmessung zwischen mindestens zwei Sendeantennen der mehreren niederfrequenten Sendeantennen und der mindestens einen Empfangsantenne durchführbar ist.

2.  System nach Anspruch 1,
    **dadurch gekennzeichnet, dass**

    - zum induktiven Laden die Sekundärspule (2) eine Ladeposition einnimmt, welche in einem bevorzugten räumlichen Positionsbereich der Sekundärspule in Bezug auf die Primärspule (4) befindlich ist, und
    - zur Herstellung der Ladeposition das System anhand der Ortsposition und der Ladeposition eine Fahrtrajektorie ermittelt, entlang welcher die Ladeposition von der Sekundärspule einnehmbar ist.

3.  System nach Anspruch 2,
    **dadurch gekennzeichnet, dass**

    - das Zugangssteuergerät (21) die mindestens zwei Sendeantennen (5,6) treibt,
    - das Zugangssteuergerät eine erste Hochfrequenzkommunikationseinheit umfasst
    - die Induktionsladeeinheit ein Induktionssteuergerät (22') aufweist,
    - das Induktionssteuergerät eine zweite Hochfrequenzkommunikationseinheit umfasst,
    - das Induktionssteuergerät der mindestens einen Empfangsantenne als Messeinheit der elektromagnetischen Abstands- und Winkelmessung zugeordnet ist und Induktionssignale der mindestens einen Empfangsantenne misst,
- von dem Induktionssteuergerät die Induktionssignale an das Zugangssteuergerät übermittelbar sind, und
- das Zugangssteuergerät als Recheneinheit mittels der Induktionssignale die Ortsposition durch Triangulation ermittelt.

**4.** System nach Anspruch 3,
**dadurch gekennzeichnet, dass**

- anhand der Ortsposition das Zugangssteuergerät (21) oder ein weiteres Steuergerät des Fahrzeugs (1) eingerichtet ist, die Fahrtrajektorie zu ermitteln, und
- das Fahrzeug eingerichtet ist, ein der Fahrtrajektorie entsprechendes Fahrmanöver selbsttätig durchzuführen oder das Fahrzeug eingerichtet ist, an einen Fahrer des Fahrzeugs über eine geeignete Mensch-Maschine-Schnittstelle ein der Fahrtrajektorie entsprechendes Fahrmanöver auszugeben.

**5.** Verfahren für ein System nach Anspruch 3 oder 4 mit den Schritten,

- a) die erste Hochfrequenzkommunikationseinheit versendet ein codiertes Suchsignal,
- b) das Induktionssteuergerät (22') empfängt das Suchsignal und die zweite Hochfrequenzkommunikationseinheit versendet ein codiertes Bestätigungssignal an das Zugangssteuergerät,
- c) das Zugangssteuergerät und das Induktionssteuergerät führen eine Initialisierungsroutine zwischen den mindestens zwei Sendeantennen (5,6) und den mindestens zwei Empfangsantennen (7,8) durch,
- d) die mindestens zwei Sendeantennen emittieren ein codiertes elektromagnetisches Positionierungssignal, wobei in Bezug auf das Fahrzeugkoordinatensystem der magnetische Anteil des Positionierungssignals eine vorgegebene Feldorientierung und eine vorgegebene Feldstärke aufweist,
- e) die mindestens eine Empfangsantenne empfängt die mindestens zwei Positionierungssignale der mindestens zwei Sendeantennen und das Induktionssteuergerät misst für jedes Positionierungssignal einen Magnetfeldvektor, der durch die Codierung des Positionssignals eindeutig einer der mindestens zwei Sendeantennen zugeordnet ist,
- f) das Induktionssteuergerät übermittelt den Magnetfeldvektor an das Zugangssteuergerät,
- g) das Zugangssteuergerät berechnet nach der Methode der Triangulation die örtliche Lage der Sendeantennen in Bezug auf die Empfangsantennen, welche eindeutig die Ortsposition beschreibt,
- h) das Zugangssteuergerät oder ein weiteres Steuergerät des Fahrzeugs ermittelt eine Fahrtrajektorie, entlang welcher die Ladeposition durch die Sekundärspule (2) einnehmbar ist.

**6.** Verfahren nach Anspruch 5,
**dadurch gekennzeichnet, dass**

- bei einem Fahrmanöver des Fahrzeugs (1) werden die Schritte d) bis h) des Verfahrens nach Anspruch 5 in Echtzeit wiederholt, um die Fahrtrajektorie zu aktualisieren,
- bei Erreichen der Ladeposition beschreibt die aktualisierte Fahrtrajektorie ein Anhaltemanöver.

**Claims**

**1.** A system, comprising a vehicle (1) with an automatic, radio-based vehicle safety unit and with an access control device (21) and comprising an access element (30) associated with the vehicle safety unit, wherein the vehicle safety unit has a plurality of low-frequency transmitting antennae (5, 6) and the access element has a low-frequency receiver, using the access control device the spatial position of the access element relative to the vehicle can be determined by the principle of electromagnetic distance and angle measurement between the transmitting antennae and the receiver,

- the system comprises a vehicle-external induction charging unit (3) with a primary coil (4),
- the vehicle comprises a secondary coil (2) for inductively charging the vehicle at the induction charging unit, and
- the induction charging unit comprises at least one low-frequency receiving antenna (7, 8),

**characterised in that**

- the access control device can determine the location position of the induction charging unit relative to the vehicle by the principle of electromagnetic distance and angle measurement between at least two transmitting antennae of the plurality of low-frequency transmitting antennae and the at least one receiving antenna.

**2.** A system according to claim 1, **characterised in that**

- for inductive charging, the secondary coil (2) occupies a charging position which is located in a preferred spatial positional region of the secondary coil with respect to the primary coil (4), and

- to establish the charging position, using the location position and the charging position, the system determines a travel trajectory, along which the charging position can be occupied by the secondary coil.

3. A system according to claim 2, **characterised in that**

- the access control device (21) drives the at least two transmitting antennae (5, 6),
- the access control device comprises a first high-frequency communication unit,
- the induction charging unit has an induction control device (22'),
- the induction control device comprises a second high-frequency communication unit,
- the induction control device is associated with the at least one receiving antenna as measuring unit of the electromagnetic distance and angle measurement and measures induction signals of the at least one receiving antenna,
- the induction control device can transmit the induction signals to the access control device, and
- the access control device as the arithmetic unit determines the location position by triangulation by means of the induction signals.

4. A system according to claim 3, **characterised in that**

- using the location position, the access control device (21) or a further control device of the vehicle (1) is configured to determine the travel trajectory, and
- the vehicle is configured to automatically perform a driving manoeuvre which corresponds to the travel trajectory or the vehicle is configured to output to a driver of the vehicle via a suitable man-machine interface a driving manoeuvre which corresponds to the travel trajectory

5. A method for a system according to claim 3 or claim 4 comprising the steps:

- a) the first high-frequency communication unit transmits an encoded search signal,
- b) the induction control device (22') receives the search signal and the second high-frequency communication unit transmits an encoded confirmation signal to the access control device,
- c) the access control device and the induction control device carry out an initialisation routine between the at least two transmitting antennae (5, 6) and the at least two receiving antennae (7, 8),
- d) the at least two transmitting antennae emit an encoded electromagnetic positioning signal, wherein the magnetic portion of the positioning signal has a predetermined field orientation and a predetermined field intensity with respect to the vehicle coordinate system,

- e) the at least one receiving antenna receives the at least two positioning signals from the at least two transmitting antennae and the induction control device measures for each positioning signal a magnetic field vector which is unambiguously assigned to one of the at least two transmitting antennae by the encoding of the position signal,
- f) the induction control device transmits the magnetic field vector to the access control device,
- g) the access control device calculates by the triangulation method the local position of the transmitting antennae with respect to the receiving antennae, which local position unambiguously describes the location position,
- h) the access control device or a further control device of the vehicle determines a travel trajectory, along which the charging position can be occupied by the secondary coil (2).

6. A method according to claim 5, **characterised in that**

- during a driving manoeuvre of the vehicle (1), steps d) to h) of the method according to claim 5 are repeated in real time in order to update the travel trajectory,
- on reaching the charging position, the updated travel trajectory describes a stopping manoeuvre.

## Revendications

1. Système comprenant un véhicule (1) équipé d'une unité de sécurité radio automatique et d'un appareil de commande d'accès (21) et ainsi qu'un élément d'accès (30) associé à l'unité de sécurité du véhicule, l'unité de sécurité du véhicule comprenant plusieurs antennes d'émission basse-fréquence (5, 6), et l'élément d'accès comprenant un récepteur basse-fréquence, l'appareil de commande d'accès permettant de déterminer la position spatiale de l'élément d'accès par rapport au véhicule selon le principe de la mesure de distance et de la mesure d'angle électromagnétiques entre les antennes d'émission et le récepteur,

- le système comprenant une unité de charge à induction (3) externe au véhicule équipée d'une bobine primaire (4),
- le véhicule comprenant une bobine secondaire (2) pour permettre la charge inductive du véhicule sur l'unité de charge à induction, et

- l'unité de charge à induction comprenant au moins une antenne de réception basse-fréquence (7, 8),

**caractérisé en ce que**

l'appareil de commande d'accès permet d'effectuer une détermination de la position locale de l'unité de charge à induction par rapport au véhicule selon le principe de la mesure de distance et de la mesure d'angle électromagnétiques entre au moins deux antennes d'émission, parmi les antennes d'émission basse-fréquence et l'antenne de réception.

2. Système conforme à la revendication 1, **caractérisé en ce que**

   pour permettre la charge inductive, la bobine secondaire (2) occupe une position de charge située dans une zone de position spatiales préférentielles de la bobine secondaire par rapport à la bobine primaire (4), et pour obtenir la position de charge, le système détermine sur le fondement de la position locale et de la position de charge, une trajectoire de déplacement le long de laquelle la position de charge peut être occupée par la bobine secondaire.

3. Système conforme à la revendication 2, **caractérisé en ce que**

   - l'appareil de commande d'accès (21) actionne les deux antennes d'émission (5, 6),
   - l'appareil de commande d'accès comprend une première unité de communication haute-fréquence,
   - l'unité de charge à induction comprend un appareil de commande à induction (22'),
   - l'appareil de commande à induction comprend une seconde unité de communication haute-fréquence,
   - l'appareil de commande à induction est associé à l'antenne de réception en tant qu'unité de mesure de la mesure de distance et la mesure d'angle électromagnétiques, et mesure les signaux d'induction de l'antenne de réception,
   - l'appareil de commande à induction permet de transmettre les signaux d'induction à l'appareil de commande d'accès, et
   - l'appareil de commande d'accès détermine par triangulation en tant qu'unité de calcul, au moyen des signaux d'induction la position locale.

4. Système conforme à la revendication 3, **caractérisé en ce que**

   - sur le fondement de la position locale, l'appareil de commande d'accès (21) ou un autre appareil de commande du véhicule (1) est susceptible de déterminer la trajectoire de déplacement, et

- le véhicule est susceptible d'effectuer automatiquement une manoeuvre de déplacement correspondant à la trajectoire de déplacement où le véhicule est susceptible de fournir au conducteur du véhicule une manoeuvre de déplacement correspondant à la trajectoire de déplacement par l'intermédiaire d'une interface homme-machine adaptée.

5. Procédé destiné à un système conforme à la revendication 3 ou 4, comprenant les étapes suivantes :

   a) la première unité de communication haute-fréquence émet un signal de recherche codé,
   b) l'appareil de commande à induction (22') reçoit le signal de commande et la seconde unité de communication haute-fréquence émet un signal d'actionnement codé à l'appareil de commande d'accès,
   c) l'appareil de commande d'accès et l'appareil de commande à induction mettent en oeuvre une routine d'initialisation entre les deux antennes d'émission (5, 6) et les deux antennes de réception (7, 8),
   d) les deux antennes d'émission émettent un signal de positionnement électromagnétique codé, et, en fonction du système de coordonnées du véhicule, la partie magnétique du signal de positionnement a une orientation de champ prédéfinie et une intensité de champ prédéfinie,
   e) l'antenne de réception reçoit les deux signaux de positionnement des deux antennes d'émission et l'appareil de commande à induction mesure pour chaque signal de positionnement un vecteur de champ magnétique qui est clairement associé par le codage du signal de positionnement à l'une des deux antennes d'émission,
   f) l'appareil de commande inductif transmet le vecteur de champ magnétique à l'appareil de commande d'accès,
   g) l'appareil de commande d'accès calcule selon la méthode de triangulation la situation locale des antennes d'émission par rapport aux antennes de réception qui signale clairement la position locale,
   h) l'appareil de commande d'accès ou un autre appareil de commande du véhicule détermine une trajectoire de déplacement le long de laquelle la position de charge peut être occupée par la bobine secondaire (2).

6. Procédé conforme à la revendication 5, **caractérisé en ce que**

   - lors d'une manoeuvre de déplacement du véhicule (1), les étapes d) à h) du procédé conforme à la revendication 5 sont répétées en temps réel pour actualiser la trajectoire de déplacement,

- lorsqu'a été atteinte la position de charge, la trajectoire de déplacement actualisée signale une manoeuvre d'arrêt.

Fig. 1

Fig. 2

**EP 2 882 618 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0984123 A2
- WO 2011006884 A2